Europäisches Patentamt

European Patent Office

Office européen des brevets

(11) Numéro de publication: **0 211 729**
**B1**

(12) **FASCICULE DE BREVET EUROPEEN**

(45) Date de publication du fascicule du brevet: **13.06.90**

(21) Numéro de dépôt: **86401543.3**

(22) Date de dépôt: **10.07.86**

(51) Int. Cl.⁵: **G 01 P 15/10**

(54) **Accéléromètre à élément vibrant.**

(30) Priorité: **17.07.85 FR 8511056**

(43) Date de publication de la demande:
**25.02.87 Bulletin 87/09**

(45) Mention de la délivrance du brevet:
**13.06.90 Bulletin 90/24**

(84) Etats contractants désignés:
**CH DE FR GB IT LI SE**

(56) Documents cités:
**DE-A-3 038 660**
**GB-A-1 596 982**
**GB-A-2 133 152**
**US-A-4 104 920**

(73) Titulaire: **SEXTANT Avionique**
**5/7 rue Jeanne Braconnier Parc Tertiaire**
**F-92368 Meudon la Forêt Cedex (FR)**

(72) Inventeur: **Fima, Henri**
**25, rue Jules Védrines**
**F-26027 Valence Cédex (FR)**

(74) Mandataire: **Bloch, Gérard et al**
**2, square de l'Avenue du Bois**
**F-75116 Paris (FR)**

Courier Press, Leamington Spa, England.

## Description

La présente invention a pour objet un accéléromètre du type comprenant un support, une masse d'inertie, reliée au support par une articulation, et un élément vibrant allongé dont les extrémités sont respectivement reliées à la masse d'inertie et au support.

Ce type d'accéléromètre décrit, par exemple, dans la demande britannique GB—A—2 133 152, présente l'avantage de délivrer une information facile à mettre sous forme numérique.

Cette information est la fréquence de vibration de l'élément vibrant, ou plusieurs fréquences de vibration dans le cas d'un fonctionnement multi-mode, qui varie d'une part, en fonction de la température de cet élément vibrant et, d'autre part, en fonction de la force longitudinale appliquée sur ledit élément. Cette force est la somme d'une quantité proportionnelle à la grandeur à mesurer, qui est l'accélération de la masse d'inertie, multipliée par sa masse, et d'une contrainte d'origine thermique dépendant de la distribution de température à l'intérieur de la structure, et de l'agencement de cette structure.

A température uniforme, cette contrainte d'origine thermique est due à la différence des coefficients de dilatation entre les matériaux constituant le support et l'élément vibrant. La valeur de cette contrainte dépend d'une part, de la raideur angulaire de l'articulation de la masse d'inertie sur le support, et d'autre part, de la raideur angulaire effective de l'élément vibrant, généralement en quartz, au niveau de l'encastrement.

Il est connu de réduire l'influence de la température de l'élément vibrant sur la précision des mesures en utilisant, par exemple, deux éléments vibrants au lieu d'un, agencés de façon différentielle, pour que les effets liés à l'accélération à mesurer s'ajoutent, tandis que les effets liés à la température des éléments vibrants se compensent et s'annulent. Une telle compensation est décrite dans la demande britannique GB—A—2 133 152 déjà citée, ainsi d'ailleurs que dans la demande allemande No. 30 38 660 A1, quoique, dans ce dernier cas, les transducteurs utilisés ne soient pas des éléments vibrants allongés, mais, des transducteurs piézoélectriques en forme de plaques.

Naturellement, même si cela n'est pas son but premier, une telle compensation entraîne une réduction des effets de la contrainte d'origine thermique exercée sur chaque élément vibrant, dans le cas où la température de la totalité de la structure est uniforme.

Toutefois, en régime thermique rapidement variable, il apparaît des gradients thermiques à l'intérieur de la structure tels que les effets des contraintes thermiques sont très importants.

La présente invention vise à pallier les inconvénients précédents en procurant, en particulier pour les utilisations aéronautiques et spatiales, une réduction de la contrainte thermique non compensable, et donc une réduction des erreurs de mesure.

A cet effet, l'invention a pour objet un accéléromètre du type défini ci-dessus, caractérisé par le fait que l'axe de l'articulation de la masse d'inertie est situé dans le plan médiateur de l'élément vibrant, de telle sorte que l'élément vibrant se déforme en arc de cercle lorsque la masse d'inertie se déplace autour de son articulation.

Dans un accéléromètre de ce type, le calcul montre que la raideur angulaire de l'élément vibrant est minimale, du fait que celui-ci se déforme selon un arc de cercle pour une faible rotation de la masse d'inertie autour de son articulation. Ceci a pour conséquence la réduction, au minimum possible, de la contrainte thermique. Ainsi la dérive d'origine thermique peut être cent fois plus faible que celle existant dans les dispositifs connus de ce type.

Avantageusement, le centre de gravité de la masse d'inertie est confondu avec le centre de gravité de l'élément vibrant.

Du fait que l'axe de l'articulation de la masse d'inertie se trouve dans le plan médiateur de la poutre, cette deuxième condition permet d'annuler tout effort tranchant, sur ladite articulation, quelle que soit l'accélération de la masse d'inertie en grandeur et en direction.

Avantageusement encore, l'accéléromètre est disposé dans une enceinte hermétique, vidée d'air, et remplie d'hélium à basse pression, de l'ordre de 10 millibars.

Ce gaz, de bonne conductivité thermique, diminue considérablement la constante de temps thermique entre le support et la masse d'inertie et ce d'autant plus que la distance entre ces deux éléments est réduite. Ainsi, les gradients thermiques à l'intérieur de la structure sont minimisés, à cause de l'amélioration des échanges thermiques.

La présente invention sera mieux comprise grâce à la description suivante de la forme de réalisation préférée de l'accéléromètre de l'invention, faite en se référant au dessin annexé, sur lequel:

la figure 1 représente un accéléromètre typique de l'art antérieur,

la figure 2 est un schéma de principe d'un accéléromètre selon l'invention, et,

la figure 3 est un exemple de réalisation d'un accéléromètre selon l'invention représentant la position de l'élément vibrant par rapport au support et la masse d'inertie ainsi que son articulation.

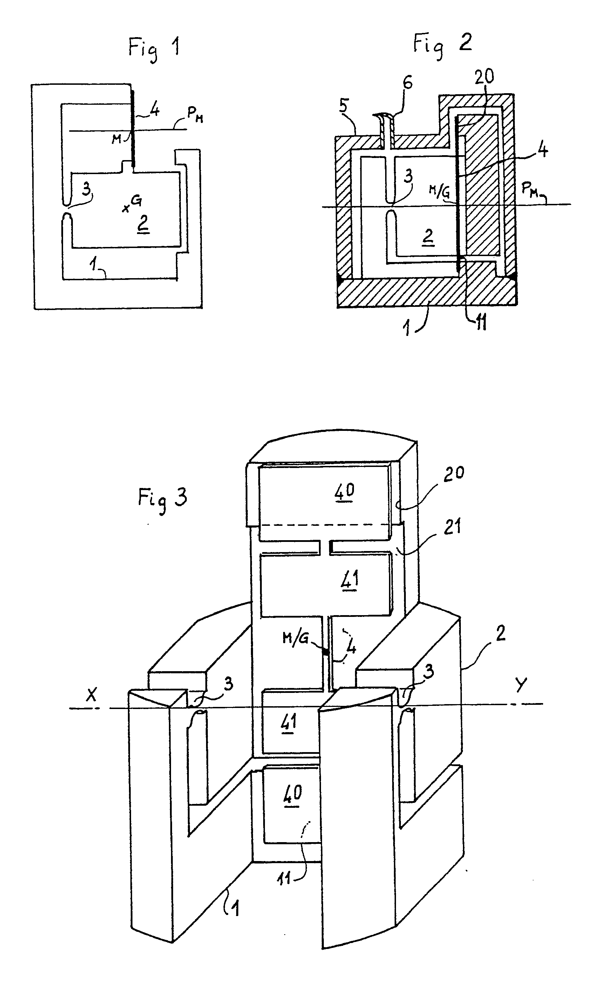

Tel que représenté sur la figure 1, un accéléromètre de l'art antérieur comprend essentiellement un support 1, plus ou moins rigide, une masse d'inertie 2 articulée à l'aide d'une articulation 3. Entre la masse 2 et un point du support est fixé l'élément vibrant 4, qui est ainsi soumis aux forces d'accélération de la masse d'inertie. On voit aisément que l'axe de l'articulation 3 n'est pas dans le plan médiateur $P_M$ de l'élément vibrant, en l'occurrence une poutre, taillée dans un cristal de quartz. On voit également que les centres de gravité M de la poutre et G de la masse d'inertie ne sont pas confondus. Par contre, sur la figure 2, la masse d'inertie 2 et le support 1 sont taillés de telle sorte, dans un bloc unique, que l'articulation 3 se trouve dans le plan médian $P_M$ de l'élément vibrant 4. En outre, les centres de gravité G et M sont confondus. Comme nous l'avons vu précédemment, la position du centre de gravité G de la masse d'inertie est choisie pour que l'axe sensible de l'accéléromètre soit confondu avec l'axe de la poutre 4 et pour que l'effort tranchant sur la charnière soit nul.

Les extrémités de la poutre 4 sont reliées au socle 1 et à la masse d'inertie 2 par l'intermédiaire de deux masselottes 41 et de deux talons 40. Les talons 40 sont, par exemple, collés sur le socle 1 en 11 et sur la masse d'inertie au niveau d'une protubérance 20.

Les deux masselottes identiques 41 servent, de façon connue, au découplage vibratoire de la poutre 4, qui vibre en flexion dans le plan de la lame de quartz.

Un dégagement 21 pratiqué dans la masse d'inertie dégage la poutre et les masselottes du reste du dispositif, afin qu'elle puisse vibrer en toute liberté.

La masse d'inertie a la forme générale d'un U ce qui permet de ramener son centre de gravité G en concordance avec le centre de gravité M de la poutre 4.

En outre l'axe X Y des charnières 3 est situé dans le plan médian de la poutre 4.

Enfin, comme le montre la figure 2, une enceinte 5 épouse, avec un espace de l'ordre de 0,8 mm maximum, les formes de la masse d'inertie. Cette enceinte est vidée d'air qui est ensuite remplacé par un gaz léger, par exemple, de l'hélium, à basse pression, comprise entre 5 et 10 millibars, grace à un queusot 6. Le dispositif objet de l'invention, permet de réaliser des accéléromètres fiables, peu onéreux, et très peu sensibles aux variations de température ambiante.

Leur association suivant des directions orthogonales permet de fabriquer des accéléromètres donnant les diverses composantes de l'accélération selon ces directions.

**Revendications**

1. Accéléromètre du type comprenant un support (1), une masse d'inertie (2), reliée au support (1) par une articulation (3), et un élément vibrant (4) allongé dont les extrémités sont respectivement reliées à la masse d'inertie (2) et au support (1), caractérisé par le fait que l'axe (XY) de l'articulation (3) de la masse d'inertie (2) est situé dans le plan médiateur ($P_M$) de l'élément vibrant (4), de telle sorte que l'élément vibrant (4) se déforme en arc de cercle lorsque la masse d'inertie (2) se déplace autour de son articulation (3).

2. Accéléromètre selon la revendication 1, dans lequel le centre de gravité (G) de la masse d'inertie (2) est confondu avec le centre de gravité (M) de l'élément vibrant (4).

3. Accéléromètre selon l'une des revendications 1 ou 2, dans lequel l'élément vibrant (4) est une poutre.

4. Accéléromètre selon l'une des revendications 1 à 3, disposé dans une enceinte (5) hermétique, vidée d'air, et remplie d'hélium à basse pression, de l'ordre de 10 millibars.

**Patentansprüche**

1. Beschleunigungsmesser mit einem Träger (1), einer mit dem Träger (1) über ein Gelenk (3) verbundenen Trägheitsmasse (2) und einem langgestreckten Schwingelement (4), dessen Enden mit der Trägheitsmasse (2) bzw. mit dem Träger (1) verbunden sind, dadurch gekennzeichnet, daß die Achse (XY) des Gelenks (3) der Trägheitsmasse (2) in der Mittelebene ($P_M$) des Schwingelementes (4) derart liegt, daß das Schwingelement (4) sich kreisbogenförmig verformt, wenn sich die Trägheitsmasse (2) um ihr Gelenk (3) bewegt.

2. Beschleunigungsmesser nach Anspruch 1, in welchem der Schwerpunkt (G) der Trägheitsmasse (2) mit dem Schwerpunkt (M) des Schwingelementes (4) zusammenfällt.

3. Beschleunigungsmesser nach einem der Ansprüche 1 oder 2, in welchem das Schwingelement (4) ein Balken ist.

4. Beschleunigungsmesser nach einem der Ansprüche 1 bis 3, angeordnet in einer hermetischen Umhüllung (5), die luftentleert und mit Helium niederen Drucks in der Größenordnung von 10 Millibar gefüllt ist.

**Claims**

1. Accelerometer of the type comprising a support (1), an inertial mass (2), connected to the support (1) by an articulation (3), and an elongate vibrating element (4) whose ends are respectively connected to the inertial mass (2) and to the support (1), characterized in that the axis (XY) of the articulation (3) of the inertial mass (2) is situated in the mid-perpendicular plane ($P_M$) of the vibrating element (4) so that the vibrating element (4) is deformed along an arc of a circle when the inertial mass (2) moves about its articulation (3).

2. Accelerometer as claimed in claim 1, wherein the center of gravity (G) of the inertial mass (2) merges with the center of gravity (M) of the vibrating element (4).

3. Accelerometer as claimed in one of claims 1 or 2, wherein the vibrating element (4) is a beam.

4. Accelerometer as claimed in one of claims 1 to 3, disposed in an hermetic enclosure (5), emptied of air, and filed with helium at a low pressure of the order of 10 millibars.

Fig 1

Fig 2

Fig 3